(19) **Europäisches Patentamt / European Patent Office / Office européen des brevets**

(11) **EP 3 608 353 B1**

(12) **EUROPEAN PATENT SPECIFICATION**

(45) Date of publication and mention
of the grant of the patent:
**21.02.2024 Bulletin 2024/08**

(21) Application number: **18781449.6**

(22) Date of filing: **03.04.2018**

(51) International Patent Classification (IPC):
**C08J 5/18** *(2006.01)*       **B32B 15/085** *(2006.01)*
**H01G 4/32** *(2006.01)*       **C08L 23/12** *(2006.01)*
**H01G 4/18** *(2006.01)*

(52) Cooperative Patent Classification (CPC):
(C-Sets available)
**H01G 4/18; C08J 5/18; C08L 23/12; H01G 4/32;**
C08J 2323/10; C08J 2323/12; C08L 2203/16;
C08L 2205/025                                    (Cont.)

(86) International application number:
**PCT/JP2018/014342**

(87) International publication number:
**WO 2018/186424 (11.10.2018 Gazette 2018/41)**

(54) **POLYPROPYLENE FILM, POLYPROPYLENE FILM WITH INTEGRATED METAL LAYER, AND FILM CAPACITOR**

POLYPROPYLENFOLIE, POLYPROPYLENFOLIE MIT INTEGRIERTER METALLSCHICHT UND FOLIENKONDENSATOR

FILM DE POLYPROPYLÈNE, FILM DE POLYPROPYLÈNE AVEC COUCHE MÉTALLIQUE INTÉGRÉE, ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2017   JP 2017073748**
**30.03.2018   JP 2018070358**

(43) Date of publication of application:
**12.02.2020   Bulletin 2020/07**

(73) Proprietor: **Oji Holdings Corporation**
**Chuo-ku**
**Tokyo 104-0061 (JP)**

(72) Inventors:
• **ISHIDA, Tatsuji**
  **Tokyo 104-0061 (JP)**
• **TOMINAGA, Takeshi**
  **Tokyo 104-0061 (JP)**
• **NAKATA, Masahiro**
  **Tokyo 104-0061 (JP)**

• **ISHIWATA, Tadakazu**
  **Tokyo 104-0061 (JP)**

(74) Representative: **Müller-Boré & Partner**
**Patentanwälte PartG mbB**
**Friedenheimer Brücke 21**
**80639 München (DE)**

(56) References cited:
**EP-A1- 1 990 353**          **EP-A1- 3 127 945**
**EP-A1- 3 279 908**          **WO-A1-2013/105552**
**WO-A1-2016/017752**          **WO-A1-2016/051496**
**WO-A1-2016/167328**          **JP-A- H09 148 176**
**JP-A- S59 211 908**          **JP-A- 2014 051 657**
**JP-A- 2016 012 705**          **JP-A- 2016 033 211**
**US-A1- 2020 176 188**

**(Cont. next page)**

(52) Cooperative Patent Classification (CPC): (Cont.)

C-Sets
**C08L 23/12, C08L 23/12**

**Description**

TECHNICAL FIELD

The present disclosure relates to a polypropylene film, a metal layer-integrated polypropylene film, and a film capacitor.

BACKGROUND ART

A polypropylene film can be used as the dielectric of a capacitor. For example, such a film can be used as the dielectric of a capacitor in an inverter that forms a power control unit of a hybrid vehicle or an electric vehicle. Patent Document 5 describes a biaxially stretched polypropylene film for capacitors. Patent Document 6 describes a biaxially stretched polypropylene film for capacitors, metallized film and capacitor. Patent Document 7 describes an electrical insulation film.

PRIOR ART DOCUMENTS

PATENT DOCUMENTS

> Patent Document 1: JP-A-2010-280795
> Patent Document 2: JP-B-6238403
> Patent Document 3: JP-B-6089186
> Patent Document 4: JP-B-3689009
> Patent Document 5: EP 3 127 945 A1
> Patent Document 6: EP 3 279 908 A1
> Patent Document 7: EP 1 990 353 A1

SUMMARY OF THE INVENTION

PROBLEMS TO BE SOLVED BY THE INVENTION

In a capacitor using a polypropylene film as a capacitor dielectric, in terms of the above usage environments (e.g., an environment in which the temperature rises in an engine room, self-heating of the capacitor, etc.), it is desirable that the capacitor has small size, light weight, and high capacity, and yet the dielectric strength (electric strength) upon the application of a DC voltage and the electric strength upon the application of an AC voltage at a high temperature of 120°C are excellent. That is, it is desirable that the polypropylene film is as thin as less than 20 $\mu$m and excellent in the above electric strengths.

In the polypropylene film described in Patent Document 1 described above, a resin having low stereoregularity is used. There is a problem in that when such a film is used as a capacitor device, excellent electric strength may not be obtained at high temperatures (e.g., 120°C).

The present disclosure has been accomplished in light of the above problem, and an object thereof is to provide a polypropylene film that gives excellent electric strength at high temperatures and consequently has excellent voltage resistance at high temperatures. More specifically, an object thereof is to provide a polypropylene film that is excellent in electric strength measured under application of a DC voltage from a DC power supply in an environment of 120°C (hereinafter sometimes referred to as electric strength under DC voltage at 120°C or $V_{DC120°C}$) and also excellent in electric strength measured under application of an AC voltage from an AC power supply in an environment of 120°C (hereinafter sometimes referred to as electric strength under AC voltage at 120°C or $V_{AC120°C}$). Another object of the present disclosure is to provide a metal layer-integrated polypropylene film including a polypropylene film and a film capacitor including a metal layer-integrated polypropylene film.

MEANS FOR SOLVING THE PROBLEMS

The present inventors have conducted extensive research on polypropylene films . As a result, they have found that there is a tendency that the smaller the crystallite size of a polypropylene film, the higher the electric strength under DC voltage at 120°C and the electric strength under AC voltage at 120°C. In addition, they have also found a tendency that the higher the fusion enthalpy of a polypropylene film, the higher the electric strength under DC voltage at 120°C and the electric strength under AC voltage at 120°C.

Through these results, the present inventors have conducted extensive research also on the relationship between the crystallite size and the fusion enthalpy of a polypropylene film. As a result, they have found that the Hall-Petch relationship, which is known mainly in the field of metal materials, is also applicable to the electric strength of a polypropylene film. The Hall-Petch relationship is expressed as $\sigma_y = a + b/\sqrt{d}$. $\sigma_y$ is the yield stress (yield strength) of a polycrystalline substance, a is the yield stress (or frictional shearing stress for dislocation motion) in the case of a monocrystalline substance, which is a constant also expressed as $\sigma_o$, b is a constant that indicates the resistance to slipping in the crystal grain boundary, which is a constant also expressed as k, and d is an average crystal grain size. It is said that a main factor of the deformation of a metal material lies in slipping deformation caused by the motion of lattice defects present in the crystals, which is called dislocation. It is said that due to an interaction with dislocation, a crystal grain boundary causes high resistance when the dislocation passes through the grain boundary. Using the dielectric breakdown of a polypropylene film upon the application of a DC voltage or an AC voltage to a polypropylene film capacitor to resemble the deformation of a metal material described above, the present inventors have studied the relationship between b and d using the difference in yield stress values expressed as $\sigma_y$ - a as an index of the electric strength at 120°C of the polypropylene film. As a result, they have found that when the b is the fusion enthalpy of a polypropylene film, and the d the crystallite size of the polypropylene film, a correlation is observed with the electric strength under DC voltage and AC voltage at 120°C. Then, they have found that in the case where the value of fusion enthalpy/$\sqrt{}$crystallite size is within a specific range (i.e., in the case where the polypropylene film satisfies formula I), the film is excellent in electric strength under DC voltage at 120°C and also excellent in electric strength under AC voltage at 120°C. The present inventors have accomplished the polypropylene film of the present disclosure as described above.

The polypropylene film of the present disclosure satisfies formula I and has a thickness of 1.0 $\mu$m to 19 $\mu$m, wherein the polypropylene film is a biaxially stretched film, which is preheated to 155°C to 172°C after longitudinal stretching and before transverse stretching.

$$31.5 \leq \text{fusion enthalpy}/\sqrt{\text{crystallite size}} \leq 33.0 \quad (I)$$

In formula I, the unit of the fusion enthalpy is J/g, and the unit of the crystallite size is nm. The crystallite size is determined using Scherrer's equation from the full width at half maximum of the reflection peak from (040) plane of $\alpha$ crystal measured by a wide-angle X-ray diffraction method. The polypropylene film comprises a first polypropylene resin and a second polypropylene resin, wherein the first polypropylene resin is comprised as a main component at a content of, relative to 100 wt% of the polypropylene resin, 50 wt% or more. The first polypropylene resin has a number average molecular weight Mn of 30,000 or more and 54,000 or less and a weight average molecular weight Mw of 250,000 or more and less than 350,000. The ratio of Mw to Mn in the first polypropylene resin is 5.0 or more and 10.0 or less. The first polypropylene resin has a heptane insoluble content of 97.0% or more and 98.5% or less and a melt flow rate of 4.0 g/10 min or more and 10.0 g/10 min or less. The second polypropylene resin has a number average molecular weight Mn of 40,000 or more and 54,000 or less and a weight average molecular weight Mw of 350,000 or more and less than 550,000. The ratio of Mw to Mn in the second polypropylene resin is 3.0 or more and 11.0 or less. The second polypropylene resin has a melt flow rate of 1.0 g/10 min or more and less than 4.0 g/10 min and a heptane insoluble content of 97.5% or more and 99.5% or less.

The metal layer-integrated polypropylene film of the present disclosure includes the polypropylene film of the present disclosure and a metal layer laminated on one or both sides of the polypropylene film.

The film capacitor of the present disclosure has the metal layer-integrated polypropylene film of the present disclosure.

EFFECT OF THE INVENTION

The polypropylene film of the present disclosure has excellent electrical insulation resistance at 120°C. More specifically, according to the present disclosure, excellent electric strength under DC voltage at high temperatures is obtained, and also excellent electric strength under AC voltage at high temperatures is obtained. As a result, a polypropylene film having excellent voltage resistance at high temperatures can be provided. Moreover, the polypropylene film of the present disclosure has a small thickness. Therefore, the polypropylene film of the present disclosure is suitable for film capacitor applications.

MODE FOR CARRYING OUT THE INVENTION

Hereinafter, embodiments of the present disclosure will be described. However, the present invention is not limited only to the embodiments.

A polypropylene film of an embodiment in the present disclosure satisfies formula I and has a thickness of 1.0

$\mu$m to 19 $\mu$m.

$$31.5 \leq \text{fusion enthalpy}/\sqrt{\text{crystallite size}} \leq 33.0 \quad \text{(I)}$$

In formula I, the unit of the fusion enthalpy is J/g, and the unit of the crystallite size is nm. The crystallite size is determined using Scherrer's equation from the full width at half maximum of the reflection peak from (040) plane of $\alpha$ crystal measured by a wide-angle X-ray diffraction method. As used herein, fusion enthalpy/$\sqrt{\text{crystallite size}}$ is hereinafter also referred to as $H_m/\sqrt{S_c}$. $H_m$ is the fusion enthalpy (unit: J/g) of a polypropylene film, and $S_c$ is the crystallite size (unit: nm) of a polypropylene film.

In the polypropylene film of an embodiment in the present disclosure, fusion enthalpy/$\sqrt{\text{crystallite size}}$ is 31.5 or more and 33.0 or less. Accordingly, the polypropylene film is excellent in electric strength under DC voltage at 120°C and also excellent in electric strength under AC voltage at 120°C (in other words, can also be expressed as being excellent in electrical insulation resistance at 120°C) . The reason why the electrical insulation resistance at 120°C is excellent is presumably that the quality (perfection) and amount of crystallites and also the crystallite size, which are effective in inhibiting the propagation of leakage currents in a polypropylene film, are appropriately controlled, and, consequently, structure breakdown resulting from Joule heating is suppressed. In the case where fusion enthalpy/$\sqrt{\text{crystallite size}}$ is significantly lower than 31.5, the electric strength under DC voltage at 120°C and/or electric strength under AC voltage at 120°C is poor. The reason for this is presumably that because the size of crystallites in the polypropylene film is not micronized, the amount of crystallites is small, and/or the crystallites are not firm, the propagation of leakage currents is likely to occur, and, consequently, structure breakdown resulting from Joule heating is likely to occur. In the case where fusion enthalpy/$\sqrt{\text{crystallite size}}$ is significantly higher than 33.0, the electric strength under DC voltage at 120°C and/or electric strength under AC voltage at 120°C is poor. The reason for this is presumably that because the crystallite size in the polypropylene film is micronized too much, the assumption that a current does not pass through the inside of crystallites is undermined, and, consequently, the propagation of leakage currents is likely to occur, for example.

The thickness of the polypropylene film of an embodiment in the present disclosure is 1.0 $\mu$m to 19 $\mu$m. Accordingly, in the case where the polypropylene film is used in a film capacitor, a capacitor with smaller size, lighter weight, and higher capacity can be achieved. Therefore, the polypropylene film is suitable for use in applications to film capacitors, which are required for applications to electric vehicles and hybrid vehicles used in high-temperature environments. When the thickness is significantly larger than 19 $\mu$m, it is difficult to achieve size reduction, making it difficult to achieve higher capacity. When the thickness is significantly smaller than 1.0 $\mu$m, the capacity as a film capacitor is likely to greatly vary.

Further, the present inventors have found that the electrical insulation resistance at 120°C tends to increase with an increase in the melting point, and, based on this finding and a theoretical formula to determine the equilibrium melting point $T_m°$ of polymer crystals, come up with formula II. That is, they have found that also in the case where a polypropylene film satisfies formula II, the electric strength under DC voltage at 120°C and the electric strength under AC voltage at 120°C are excellent. $T_m°$ is a melting point when the lamella thickness is infinite. The theoretical formula to determine $T_m°$ is expressed as $T_m = T_m° - (T_m° \times k)/l$, wherein $T_m$ is a melting point (more specifically, the melting point of a polypropylene film obtained by DSC measurement of a polypropylene film), k is a constant, and l is the lamella thickness.

It is preferable that the polypropylene film of an embodiment in the present disclosure satisfies formula II.

$$176 \leq \text{melting point} + 50/\text{crystallite size} \quad \text{(II)}$$

In formula II, the unit of the melting point is °C, and the unit of the crystallite size is nm. The formula II is derived as follows. First, $k = 2\sigma e/\Delta hf$ is substituted into the theoretical formula $T_m = T_m° - (T_m° \times k)/l$ to derive $T_m° = T_m + (T_m° \times 2\sigma e/\Delta hf)/l$ (the derived formula is also referred to as formula $\alpha$). Here, $\sigma e$ is the surface energy of the folding plane of lamellae, and $\Delta hf$ is the heat of fusion of a perfect solid crystal structure. Next, $T_m° = 176$, $T_m° \times 2\sigma e = 50$, and $\Delta hf \times l = \text{crystallite size}$ (= $S_c$) are substituted. Finally, when the right-hand side of formula $\alpha$ (i.e., $T_m + 50/S_c$) is equal to or larger than the left-hand side of formula $\alpha$ (i.e., the melting point $T_m°$ when the lamella thickness is infinite (= 176)), the formula II can be derived ("Kobunshi" (High Polymers, Japan), Vol. 16 (1967) No. 6, pp. 694-706, Fumiyuki Hamada) .

In the case where melting point + 50/crystallite size is 176 or more, the crystallite size is such a size that the propagation of currents is difficult, and/or the perfection of lamellae is high. Thus, it is presumed that the electrical insulation resistance at 120°C is excellent.

It is preferable that the polypropylene film of an embodiment in the present disclosure is for capacitors.

The polypropylene film of an embodiment in the present disclosure contains a first polypropylene resin as a main component, the number average molecular weight Mn of the first polypropylene resin is 30,000 or more and 54,000 or less, the weight average molecular weight Mw of the first polypropylene resin is 250,000 or more and less than 350,000, and the ratio of Mw to Mn in the first polypropylene resin is 5.0 or more and 10.0 or less.

Further, the heptane insoluble content of the first polypropylene resin is 97.0% or more and 98.5% or less, and the melt flow rate of the first polypropylene resin is 4.0 g/10 min or more and 10.0 g/10 min or less.

A metal layer-integrated polypropylene film of an embodiment in the present disclosure includes a polypropylene film and a metal layer laminated on one or both sides of the polypropylene film.

A film capacitor of an embodiment in the present disclosure includes a metal layer-integrated polypropylene film in a wound form. The film capacitor may also have a configuration in which a plurality of layers of a metal layer-integrated polypropylene film are laminated.

As used herein, polypropylene may be abbreviated to PP, and a polypropylene resin may be abbreviated to a PP resin.

As used herein, the expressions "contain" and "include" encompass the concepts "contain", "include", "be composed substantially of", and "be composed exclusively of".

As used herein, the expression "capacitor" encompasses the concepts "capacitor", "capacitor device", and "film capacitor".

The polypropylene film of this embodiment is not a microporous film, and thus does not have a large number of holes.

The polypropylene film of an embodiment in the present disclosure may be composed of two or more layers and is preferably composed of a single layer.

Here, the directions described and used in the embodiments in the present disclosure will be described in detail. The longitudinal direction of a polypropylene film is sometimes referred to as a lengthwise direction. In the embodiments of the present disclosure, a longitudinal direction is the same direction as Machine Direction (hereinafter referred to as "MD direction"). The MD direction is sometimes referred to as a flow direction. However, the present invention is not limited to a mode in which a longitudinal direction means the same direction as a MD direction. Meanwhile, the transverse direction of a polypropylene film is sometimes referred to as a widthwise direction. In the embodiments of the present disclosure, a transverse direction is the same direction as Transverse Direction (hereinafter referred to as "TD direction"). However, the present invention is not limited to a mode in which a transverse direction means the same direction as a TD direction.

Embodiment 1

Hereinafter, the present disclosure will be described through Embodiment 1.

Both sides of a polypropylene film in Embodiment 1 can be defined by a first surface and a second surface. The first surface may be a rough surface. When the first surface is a rough surface, wrinkles are unlikely to be formed during device winding in the capacitor preparation. It is also possible that the second surface is a rough surface.

The center line average roughness Ra of the first surface in the polypropylene film is 0.03 $\mu$m or more and 0.08 $\mu$m or less, for example. The maximum height Rz of the first surface in the polypropylene film is 0.3 $\mu$m or more and 0.8 $\mu$m or less, for example. Both Ra and Rz are determined using a three-dimensional surface roughness meter SURFCOM Model 1400D-3DF-12 manufactured by Tokyo Seimitsu Co., Ltd., in accordance with the method described in JIS-B 0601:2001.

Ra of the second surface in the polypropylene film is 0.03 $\mu$m or more and 0.08 $\mu$m or less, for example. Rz of the second surface in the polypropylene film is 0.3 $\mu$m or more and 0.8 $\mu$m or less, for example.

The thickness of the polypropylene film in Embodiment 1 is 1.0 $\mu$m to 19 $\mu$m. Because the thickness is 1.0 $\mu$m to 19 $\mu$m, in the case where the polypropylene film is used in a film capacitor, a capacitor with smaller size, lighter weight, and higher capacity can be achieved. Therefore, the polypropylene film is suitable for use in applications to film capacitors, which are required for applications to electric vehicles and hybrid vehicles used in high-temperature environments. The thickness of the polypropylene film is 19 $\mu$m or less, preferably 18 $\mu$m or less, more preferably 10 $\mu$m or less, still more preferably 6.0 $\mu$m or less, yet more preferably 4.0 $\mu$m or less, and particularly preferably 3.0 $\mu$m or less. When the thickness is significantly larger than 19 $\mu$m, it is difficult to achieve size reduction, making it difficult to achieve higher capacity. In addition, the thickness of the polypropylene film in Embodiment 1 is 1.0 $\mu$m or more, preferably 1.5 $\mu$m or more, more preferably 1.8 $\mu$m or more, and still more preferably 2.0 $\mu$m or more. When the thickness is significantly smaller than 1.0 $\mu$m, the capacity as a film capacitor is likely to greatly vary. The thickness is measured using a micrometer (JIS-B7502) in accordance with JIS-C2330.

The polypropylene film of Embodiment 1 satisfies formula I.

$$31.5 \leq \text{fusion enthalpy}/\sqrt{\text{crystallite size}} \leq 33.0 \quad (I)$$

In formula I, the unit of the fusion enthalpy is J/g, and the unit of the crystallite size is nm. The polypropylene film of Embodiment 1 satisfies formula I, and thus is excellent in electric strength under DC voltage at 120°C and also excellent in electric strength under AC voltage at 120°C. Therefore, the polypropylene film of Embodiment 1 allows for the preparation of a film capacitor that is excellent in electric strength under DC voltage at 120°C and also excellent in electric strength under AC voltage at 120°C. In addition, the polypropylene film of Embodiment 1 is not only excellent in electric strength under DC voltage at 120°C and also excellent in electric strength under AC voltage at 120°C, but also excellent in electric strength under AC voltage at 100°C in addition. This point is clear from the Examples herein, for example. Incidentally, formula I can also be expressed as

$$31.5 \leq H_m \div (S_c)^{0.5} \leq 33.0 \ (I')$$

($H_m$ is the fusion enthalpy (unit: J/g) of a polypropylene film, and $S_c$ is the crystallite size (unit: nm) of a polypropylene film). In addition, as used herein, fusion enthalpy/√crystallite size is hereinafter also referred to as $H_m/\sqrt{S_c}$. $H_m$ is the fusion enthalpy (unit: J/g) of a polypropylene film, and $S_c$ is the crystallite size (unit: nm) of a polypropylene film. The value of $H_m/\sqrt{S_c}$ is preferably 31.6 or more, more preferably 31.7 or more, and still more preferably 31.8 or more. The value of $H_m/\sqrt{S_c}$ is preferably 32.8 or less, more preferably 32.5 or less, still more preferably 32.3 or less, and particularly preferably 32.1 or less.

The fusion enthalpy ($H_m$) of the polypropylene film is 105 J/g or more, for example, and preferably 108 J/g or more. A fusion enthalpy of 105 J/g or more results in firm crystallites and is preferable. The upper limit of the fusion enthalpy is 125 J/g, for example, and preferably 122 J/g. In the case where the polypropylene film is a stretched film, the fusion enthalpy is affected not only by raw materials, but also by stretching conditions (e.g., temperature at the time of longitudinal stretching, stretching speed at the time of longitudinal stretching, draw ratio of longitudinal stretching, preheating temperature before transverse stretching, temperature at the time of transverse stretching, stretching speed at the time of transverse stretching, and draw ratio of transverse stretching) and relaxation conditions after stretching. For example, the higher the temperatures at the time of longitudinal stretching and transverse stretching, the higher the fusion enthalpy tends to be. The higher the preheating temperature before transverse stretching, the higher the fusion enthalpy tends to be. The degree of influence of the stretching speed on the fusion enthalpy varies depending on the stretching temperature. However, the higher the speeds at the time of longitudinal stretching and transverse stretching, the higher the fusion enthalpy tends to be. The lower the ratios of longitudinal stretching and transverse stretching, the higher the fusion enthalpy tends to be. The higher the relaxation rate defined by the following formula, the higher the fusion enthalpy tends to be.

Relaxation rate (%) = {1 - (transverse draw ratio after

relaxation/maximum transverse draw ratio)} × 100

The fusion enthalpy of a polypropylene film is a value determined in the first run of differential scanning calorimetry, and specifically is a value measured by the method described in the Examples.

In terms of electric strength, the crystallite size ($S_c$) of the polypropylene film is preferably 14.5 nm or less, more preferably 14.2 nm or less, still more preferably 13.0 nm or less, and particularly preferably 12.5 nm or less. When the crystallite size is 14.5 nm or less, the resulting polypropylene film contains a large-area crystallite interface and thus has a reduced tendency to propagate leakage currents. The crystallite size is preferably 10.0 nm or more, more preferably 10.5 nm or more, still more preferably 11.0 nm or more, and particularly preferably 11.5 nm or more. The reason why 10.0 nm or more is preferable is that such a size is desirable in ensuring voltage resistance without allowing a current to pass through the inside of crystallites. In the case where the polypropylene film is a stretched film, the crystallite size is affected not only by the blending amount and molecular weight of the polypropylene resin, but also by stretching conditions (e.g., temperature at the time of longitudinal stretching, speed at the time of longitudinal stretching, preheating temperature before transverse stretching, temperature at the time of transverse stretching, and speed at the time of transverse stretching). For example, the lower the temperature at the time of longitudinal stretching, the smaller the crystallite size tends to be. The lower the speed at the time of longitudinal stretching, the larger the crystallite size tends to be. The lower the preheating temperature before transverse stretching, the larger the crystallite size tends to be. The lower the temperature at the time of transverse stretching, the smaller the crystallite size tends to be. The lower the speed at the time of transverse stretching, the larger the crystallite size tends to be. The crystallite size is calculated using Scherrer's equation from the full width at half maximum of the reflection peak from (040) plane of α crystal by a wide-angle X-ray diffraction method (XRD method). Scherrer's equation is shown below as formula (1).
[Equation 1]

$$D = K \times \lambda / (\beta \times Cos\theta) \quad (1)$$

In formula (1), D is a crystallite size (nm), K is a constant (shape factor), $\lambda$ is the wavelength of the X-ray used (nm), $\beta$ is a full width at half maximum, and $\theta$ is a diffraction Bragg angle. 0.94 is used as K. 0.15418 nm is used as $\lambda$.

It is preferable that the polypropylene film of Embodiment 1 satisfies formula II.

$$176 \leq melting\ point + 50/crystallite\ size \quad (II)$$

In formula II, the unit of the melting point is °C, and the unit of the crystallite size is nm. Formula II can also be expressed as

$$176 \leq T_m + 50 \div S_c \quad (II')$$

($T_m$ is the melting point (unit: °C) of a polypropylene film, and $S_c$ is the crystallite size (unit: nm) of a polypropylene film). As the lower limit of melting point + 50/crystallite size, 176.05 and 176.1 can be mentioned, for example. As the upper limit of melting point + 50/crystallite size, 180, 179, and 178.4 can be mentioned, for example.

The melting point of the polypropylene film is 170°C or more, for example, and preferably 171°C or more. When the melting point is 170°C or more, the perfection of lamellae is high, and such a film has a reduced tendency to propagate currents. The upper limit of the melting point is 176°C, for example, and preferably 175°C. In the case where the polypropylene film is a stretched film, the melting point is affected not only by raw materials, but also by stretching conditions (e.g., temperature at the time of longitudinal stretching, speed at the time of longitudinal stretching, ratio of longitudinal stretching, preheating temperature before transverse stretching, temperature at the time of transverse stretching, speed at the time of transverse stretching, and ratio of transverse stretching) and relaxation conditions after stretching. For example, the higher the temperatures at the time of longitudinal stretching and transverse stretching, the less the micronization of lamellae progresses, and the higher the melting point tends to be. The higher the preheating temperature before transverse stretching, the higher the melting point tends to be. The degree of influence of the stretching speed on the melting point varies depending on the stretching temperature. However, the higher the speeds at the time of longitudinal stretching and transverse stretching, the higher the melting point tends to be. The lower the ratios of longitudinal stretching and transverse stretching, the higher the melting point tends to be. The higher the relaxation rate, the higher the melting point tends to be. The melting point of a polypropylene film is a value determined in the first run of differential scanning calorimetry, and specifically is a value measured by the method described in the Examples.

The electric strength under DC voltage at 120°C ($V_{DC120°C}$) of the polypropylene film in Embodiment 1 is preferably 510 V/$\mu$m or more, more preferably 515 V/$\mu$m or more, and still more preferably 530 V/$\mu$m or more. The upper limit of the electric strength under DC voltage at 120°C is, although a higher value is preferable, 600 V/$\mu$m or 580 V/$\mu$m, for example.

The electric strength under AC voltage at 120°C ($V_{AC120°C}$) of the polypropylene film in Embodiment 1 is preferably 230 V/$\mu$m or more, more preferably 232 V/$\mu$m or more, and still more preferably 233 V/$\mu$m or more. The upper limit of the electric strength under AC voltage at 120°C is, although a higher value is preferable, 300 V/$\mu$m or 270 V/$\mu$m, for example.

The total of the $V_{AC120°C}$ and the $V_{DC120°C}$ ($V_{AC120°C}$ + $V_{DC120°C}$) of the polypropylene film in Embodiment 1 is preferably 750 V/$\mu$m or more, more preferably 760 V/$\mu$m or more, and still more preferably 770 V/$\mu$m or more. The upper limit of the total of the $V_{AC120°C}$ and the $V_{DC120°C}$ is, although a higher value is preferable, 1,000 V/$\mu$m, 900 V/$\mu$m or 850 V/$\mu$m, for example.

In the polypropylene film of Embodiment 1, fusion enthalpy/$\sqrt{}$crystallite size is 31.5 or more and 33.0 or less. Thus, the polypropylene film is excellent not only in electrical insulation resistance at 120°C but also in AC electric strength at 100°C. Therefore, the polypropylene film of Embodiment 1 allows for an increase in the capacitor rated voltage for rectifying the current containing an AC component, whereby energy saving can be achieved. The AC electric strength at 100°C ($V_{AC100°C}$) of the polypropylene film in Embodiment 1 is preferably 243 V/$\mu$m or more. The upper limit of the AC electric strength at 100°C is, although a higher value is preferable, 300 V/$\mu$m, for example.

The polypropylene film of Embodiment 1 contains a polypropylene resin. The content of the polypropylene resin is, based on the entire polypropylene film (when the entire polypropylene film is taken as 100 wt%), preferably 90 wt% or more, and more preferably 95 wt% or more. The upper limit of the content of the polypropylene resin is, based on the entire polypropylene film, 100 wt% or 98 wt%, for example.

With respect to the total ash content of the polypropylene resin, considering the electrical properties, a lower value is preferable. The total ash content is, based on the polypropylene resin, preferably 50 ppm or less, more preferably 40 ppm or less, and still more preferably 30 ppm or less. The lower limit of the total ash content is 2 ppm or 5 ppm, for example. A lower total ash content means that the amount of impurities, such as polymerization catalyst residues, is smaller.

The polypropylene resin contains two or more kinds of polypropylene resins.

The polypropylene resin contained in the largest amount is herein positioned as a main component, and herein referred to "main-component polypropylene resin".

The polypropylene film of Embodiment 1 contains the first polypropylene resin described below and the second polypropylene resin described below.

The polypropylene resin includes a first polypropylene resin. The content of the first polypropylene resin is, relative to 100 wt% of the polypropylene resin, 50 wt% or more, preferably 55 wt% or more, and more preferably 60 wt% or more. The upper limit of the content of the first polypropylene resin may be, relative to 100 wt% of the polypropylene resin, 100 wt% or less, 99 wt% or less, 98 wt% or less, or 95 wt% or less, for example. The content is preferably 90 wt% or less, more preferably 85 wt% or less, and still more preferably 80 wt% or less relative to 100 wt% of the polypropylene resin. Like this, the polypropylene film of Embodiment 1 may contain a first polypropylene resin as a main component. As the first polypropylene resin, isotactic polypropylene can be mentioned, for example.

The weight average molecular weight Mw of the first polypropylene resin is 250,000 or more and less than 350,000, preferably 250,000 or more and 345,000 or less, and more preferably 270,000 or more and 340,000 or less. When Mw is 250,000 or more and less than 350, 000, a polypropylene film in which the value of $H_m/\sqrt{S_c}$ is 31.5 or more and 33.0 or less is likely to be obtained. In addition, when Mw is 250,000 or more and less than 350,000, it is easy to control of the thickness of a cast master sheet, and unevenness in the thickness is unlikely to occur.

The number average molecular weight Mn of the first polypropylene resin is 30,000 or more and 54,000 or less, preferably 33,000 or more and 52,000 or less, and more preferably 33,000 or more and 50,000 or less. When the number average molecular weight Mn of the first polypropylene resin is 30,000 or more and 54,000 or less, a polypropylene film in which the value of $H_m/\sqrt{S_c}$ is 31.5 or more and 33.0 or less is likely to be obtained.

The z-average molecular weight Mz of the first polypropylene resin is preferably 700,000 or more and 1,550,000 or less, and more preferably 750,000 or more and 1,500,000 or less. When the z-average molecular weight Mz of the first polypropylene resin is 700,000 or more and 1,550,000 or less, a polypropylene film in which the value of $H_m/\sqrt{S_c}$ is 31.5 or more and 33.0 or less is likely to be obtained.

The molecular weight distribution (Mw/Mn) of the first polypropylene resin is 5.0 or more, and preferably 5.5 or more. The Mw/Mn of the first polypropylene resin is 10.0 or less, and preferably 9.5 or less. When the Mw/Mn of the first polypropylene resin is 5.0 or more and 10.0 or less, a polypropylene film in which the value of $H_m/\sqrt{S_c}$ is 31.5 or more and 33.0 or less is likely to be obtained. Incidentally, the molecular weight distribution Mw/Mn is the ratio of the weight average molecular weight Mw to the number average molecular weight Mn.

The molecular weight distribution (Mz/Mn) of the first polypropylene resin is preferably 10 or more and 70 or less, more preferably 15 or more and 60 or less, and still more preferably 15 or more and 50 or less. When the molecular weight distribution (Mz/Mn) of the polypropylene resin is 10 or more and 70 or less, a polypropylene film in which the value of $H_m/\sqrt{S_c}$ is 31.5 or more and 33.0 or less is likely to be obtained. Incidentally, the molecular weight distribution Mz/Mn is the ratio of the z-average molecular weight Mz to the number average molecular weight Mn.

As used herein, the weight average molecular weight (Mw), number average molecular weight (Mn), z-average molecular weight (Mz), and molecular weight distribution (Mw/Mn and Mz/Mn) of the polypropylene resin are values measured using a gel permeation chromatography (GPC) apparatus. More specifically, the values are measured using a differential refractometer (RI) built-in high-temperature GPC measuring apparatus HLC-8121GPC-HT (trade name) manufactured by Tosoh Corporation. As the GPC column, three TSKgel GMHHR-H(20)HT columns manufactured by Tosoh Corporation are connected and used. The column temperature is set at 140°C, and trichlorobenzene is passed as an eluant at a flow rate of 1.0 ml/10 min to obtain measured values of Mw and Mn. Using a standard polystyrene manufactured by Tosoh Corporation, a calibration curve regarding its molecular weight M is prepared, and the measured values are converted into polystyrene values to give Mw, Mn, and Mz.

The melt flow rate (MFR) at 230°C of the first polypropylene resin is 10.0 g/10 min or less, preferably 7.0 g/10 min or less, and more preferably 6.0 g/10 min or less. In addition, the melt flow rate at 230°C is 4.0 g/10 min or more. The melt flow rate at 230°C is measured in accordance with JIS K 7210-1999 under a load of 2.16 kg at 230°C. The unit of the melt flow rate, g/10 min, is also expressed as dg/min.

The heptane insoluble content of the first polypropylene resin is 97.0% or more. The heptane insoluble content is 98.5% or less. A higher heptane insoluble content indicates that the stereoregularity of the resin is higher. When the heptane insoluble content (HI) is 97.0% or more and 98.5% or less, because of the moderately high stereoregularity, the crystallinity of the polypropylene resin in the polypropylene film moderately improves, and the voltage resistance at high temperatures improves. Further, the speed of solidification (crystallization) at the time of the formation of a cast master sheet is moderated, resulting in moderate stretchability. The measurement method for the heptane insoluble content (HI) is based on the method described in the Examples.

With respect to the total ash content of the first polypropylene resin, considering the electrical properties, a lower value is preferable. The total ash content is, based on the first polypropylene resin, preferably 50 ppm or less, more preferably 40 ppm or less, and still more preferably 30 ppm or less. The lower limit of the total ash content is 2 ppm or 5 ppm, for example.

The polypropylene resin further includes a second polypropylene resin. It is preferable that resins constituting the polypropylene film are the first polypropylene resin and the second polypropylene resin.

The content of the second polypropylene resin is, relative to 100 wt% of the polypropylene resin, preferably 50 wt% or less, more preferably 49 wt% or less, still more preferably 45 wt% or less, and particularly preferably 40 wt% or less. In addition, in the case where the polypropylene resin includes the second polypropylene resin, the lower limit of the content of the second polypropylene resin may be, for example, relative to 100 wt% of the polypropylene resin, 1 wt% or more, 2 wt% or more, or 5 wt% or more. The content is preferably 10 wt% or more, more preferably 15 wt% or more, and still more preferably 20 wt% or more relative to 100 wt% of the polypropylene resin. As the second polypropylene resin, isotactic polypropylene can be mentioned, for example.

Mw of the second polypropylene resin is 350,000 or more. Mw in the second polypropylene resin is 550,000 or less, preferably 450,000 or less, and more preferably 380,000 or less.

Mn of the second polypropylene resin is 40,000 or more and 54,000 or less, preferably 42,000 or more and 50,000 or less, and more preferably 44,000 or more and 48,000 or less.

Mz of the second polypropylene resin is preferably more than 1,550,000 and 2,000,000 or less, and more preferably 1,580,000 or more and 1,700,000 or less.

In the second polypropylene resin, the ratio of Mw to Mn (Mw/Mn) is 3.0 or more, preferably 4.5 or more, more preferably 5.0 or more, still more preferably 5.5 or more, still more preferably 7.0 or more, and particularly preferably 7.5 or more . The upper limit of Mw/Mn in the second polypropylene resin is 11.0. The upper limit may be 10.0, 9.0, or 8.5, for example. When a second polypropylene resin whose Mw/Mn and Mw satisfy the above ranges, respectively, is used together with the first polypropylene resin, the crystallite size can be easily reduced.

The ratio of Mz to Mn (Mz/Mn) in the second polypropylene resin is preferably 30 or more and 40 or less, and more preferably 33 or more and 36 or less.

The melt flow rate at 230°C in the second polypropylene resin is less than 4.0 g/10 min, preferably 3.9 g/10 min or less, and more preferably 3.8 g/10 min or less. In addition, the melt flow rate at 230°C is 1.0 g/10 min or more, more preferably 1.5 g/10 min or more, and still more preferably 2.0 g/10 min or more.

The heptane insoluble content of the second polypropylene resin is 97.5% or more, preferably 98.0% or more, more preferably more than 98.5%, and particularly preferably 98.6% or more. In addition, the heptane insoluble content is 99.5% or less, and preferably 99.0% or less.

With respect to the total ash content of the second polypropylene resin, considering the electrical properties, a lower value is preferable. The total ash content is, based on the second polypropylene resin, preferably 50 ppm or less, more preferably 40 ppm or less, and still more preferably 30 ppm or less. The lower limit of the total ash content is 2 ppm or 5 ppm, for example.

Taking the entire polypropylene resin as 100 wt%, the total amount of the first polypropylene resin and the second polypropylene resin may be 90 wt% or more, 95 wt% or more, or 100 wt%, for example.

The polypropylene film of Embodiment 1 may further contain resins other than polypropylene resins. Examples of such resins include polyethylene, poly(1-butene), polyisobutene, poly(1-pentene), poly(1-methylpentene), ethylene-propylene copolymer, propylene-butene copolymer, ethylene-butene copolymer, styrene-butadiene random copolymer, and styrene-butadiene-styrene block copolymer.

The polypropylene film of Embodiment 1 may further contain an additive. Examples of additives include antioxidants, chlorine absorbers, UV absorbers, lubricants, plasticizers, flame retarders, antistatic agents, and colorants.

The polypropylene film of Embodiment 1 is a biaxially stretched film.

Next, a method for preparing a polypropylene film of this Embodiment 1 will be described. However, the method for preparing a polypropylene film of this Embodiment 1 is not limited to the following description.

The polypropylene film of Embodiment 1 can be prepared through procedures in which, for example, a cast master sheet is prepared, and the cast master sheet is biaxially stretched. A cast master sheet can be prepared through procedures in which, for example, a resin is fed together with additives as necessary to an extruder, melt-extruded through a T-die, and solidified. The biaxial stretching of a cast master sheet is preferably sequential biaxial stretching. In sequential biaxial stretching, for example, a cast master sheet is introduced between rolls having different speeds, stretched in the flow direction (hereinafter sometimes referred to as "longitudinally stretched"), cooled as necessary, introduced to a tenter, stretched in the widthwise direction (hereinafter sometimes referred to as "transversely stretched"), relaxed, heat-set, and wound up. The sheet is subjected to an aging treatment in an atmosphere at 20°C to 45°C as necessary and cut to a desired product width. One or both sides of the polypropylene film thus obtained is subjected to a corona discharge treatment as necessary.

Extrusion to form a cast master sheet is preferably performed at an extrusion temperature of 220°C to 270°C.

The casting temperature, that is, the surface temperature of the metal drum, is preferably 40°C to 100°C, and more preferably 45°C to 95°C. When the casting temperature is significantly lower than 40°C, the $H_m/\sqrt{S_c}$ may go below 31.5, resulting in poor electrical insulation resistance at 120°C. With an increase in the casting temperature, fusion enthalpy/A/crystallite size, that is, the value of $H_m/\sqrt{S_c}$, tends to become larger. In addition, with a decrease in the casting temperature, the value of $H_m/\sqrt{S_c}$ tends to become smaller.

The thickness of the cast master sheet may be 0.05 mm or more, for example, and may also be 0.1 mm or more. The upper limit of the thickness of the cast master sheet may be 2 mm or 1 mm.

With respect to the biaxial stretching of a cast master sheet, it is preferable that the cast master sheet is preheated to 125°C to 165°C before longitudinal stretching. Hereinafter, the temperature of preheating before longitudinal stretching is sometimes referred to as a pre-longitudinal stretching preheating temperature.

The temperature at the time of longitudinal stretching (longitudinal stretching temperature) is preferably 125°C to 165°C. When the temperature at the time of longitudinal stretching is significantly higher than 165°C, the $H_m/\sqrt{S_c}$ may go below 31.5, resulting in poor electrical insulation resistance at 120°C. With an increase in the longitudinal stretching temperature, the value of $H_m/\sqrt{S_c}$ tends to become smaller. With a decrease in the longitudinal stretching temperature, the value of $H_m/\sqrt{S_c}$ tends to become larger.

The stretching speed at the time of longitudinal stretching (hereinafter sometimes referred to as "longitudinal stretching speed") is preferably 400%/s or more, and more preferably 500%/s to 60,000%/s.

The draw ratio of longitudinal stretching (longitudinal draw ratio) is preferably 3.5 to 5.5, more preferably 4.0 to 5.4, and still more preferably 4.0 to 5.0. When the draw ratio is significantly higher than 5.5, the value of $H_m/\sqrt{S_c}$ may exceed 33, leading to poor electrical insulation resistance at 120°C. With an increase in the longitudinal draw ratio, the value of $H_m/\sqrt{S_c}$ tends to become larger. In addition, with a decrease in the longitudinal draw ratio, the value of $H_m/\sqrt{S_c}$ tends to become smaller.

The film after longitudinal stretching is preheated to 155°C to 172°C before transverse stretching. When the temperature is significantly higher 172°C, the value $H_m/\sqrt{S_c}$ may go below 31.5, resulting in poor electrical insulation resistance at 120°C. With an increase in the temperature of preheating before transverse stretching (hereinafter sometimes referred to as "pre-transverse stretching preheating temperature"), the value of $H_m/\sqrt{S_c}$ tends to become smaller. With a decrease in the pre-transverse stretching preheating temperature, the value of $H_m/\sqrt{S_c}$ tends to become larger.

It is preferable that the preheated film before transverse stretching is transversely stretched at 150°C to 165°C. The temperature at the time of transverse stretching (hereinafter sometimes referred to as "transverse stretching temperature") is preferably 155°C to 165°C, and more preferably 160°C to 165°C. However, when the temperature is significantly higher than 165°C, the value of $H_m/\sqrt{S_c}$ may go below 31.5, leading to poor electrical insulation resistance at 120°C. With an increase in the transverse stretching temperature, the value of $H_m/\sqrt{S_c}$ tends to become smaller. With a decrease in the transverse stretching temperature, the value of $H_m/\sqrt{S_c}$ tends to become larger.

The stretching speed at the time of transverse stretching (hereinafter sometimes referred to as "transverse stretching speed") is preferably 280%/s to 350%/s. When the transverse stretching speed is significantly lower than 280%/s, the value of $H_m/\sqrt{S_c}$ may go below 31.5, leading to poor electrical insulation resistance at 120°C. In addition, when the transverse stretching speed is significantly higher than 350%/s, the value of $H_m/\sqrt{S_c}$ may exceed 33, or the film may break at the time of transverse stretching. With a decrease in the transverse stretching speed, the $H_m/\sqrt{S_c}$ tends to become smaller. In addition, with an increase in the transverse stretching speed, the $H_m/\sqrt{S_c}$ tends to become larger.

The draw ratio of transverse stretching (hereinafter sometimes referred to as "transverse draw ratio") is preferably 9 to 11, and more preferably 9.2 to 10.7. When the draw ratio is significantly lower than 9, the value $H_m/\sqrt{S_c}$ may go below 31.5, resulting in poor electrical insulation resistance at 120°C. Meanwhile, when the draw ratio is significantly higher than 11, the value of $H_m/\sqrt{S_c}$ may exceed 33.0, or the film may break at the time of transverse stretching.

It is preferable that the film after transverse stretching is relaxed at 157°C to 170°C. Hereinafter, the temperature at the time of relaxation is sometimes referred to as a relaxation temperature.

The time spent on relaxation, that is, the time spent on heat setting, is preferably within 10 seconds, and more preferably 1 second to 9 seconds.

It is preferable that relaxation is performed in such a manner that the relaxation rate [{1 - (transverse draw ratio after relaxation/maximum transverse draw ratio)} × 100] is 1% to 15%.

Incidentally, fusion enthalpy and crystallite size are affected by stretching conditions. For example, in the case where the transverse stretching speed is changed, the values of fusion enthalpy and crystallite size will both be changed. Therefore, it is difficult to fix one of fusion enthalpy and crystallite size and change the other. Meanwhile, in Embodiment 1, $H_m/\sqrt{S_c}$ considering both fusion enthalpy and crystallite size is to satisfy a certain range, that is, 31.5 or more and 33.0 or less. That is, fusion enthalpy and crystallite size are not individually controlled, but $H_m/\sqrt{S_c}$ considering both is controlled.

The polypropylene film of Embodiment 1 thus obtained can be used as the dielectric of a capacitor. Preferably, the film can be used as the dielectric of a capacitor that forms an inverter in a hybrid vehicle or an electric vehicle.

For processing into a capacitor, a metal layer may be laminated on one or both sides of the polypropylene film in Embodiment 1 to form a metal layer-integrated polypropylene film. The metal layer functions as an electrode. As metals used for the metal layer, for example, zinc, lead, silver, chromium, aluminum, copper, nickel, and like elemental metals, mixtures of two or more kinds of them and alloys thereof can be used. However, considering the environment, economical efficiency and capacitor performance, zinc and aluminum are preferable.

As methods for laminating a metal layer on one or both sides of a polypropylene film, for example, a vacuum deposition method and a sputtering method can be mentioned as examples. In terms of productivity and economical efficiency, vacuum deposition is preferable. As vacuum deposition methods, generally, a crucible method and a wire method can be mentioned as examples, and an optimal method can be suitably selected without particular limitations.

The margin pattern in the lamination of a metal layer by vapor deposition is not particularly limited either. However, in terms of improving the properties of the capacitor, such as safety, it is preferable that a pattern including a so-called special margin, such as a fish-net pattern or a T-margin pattern, is formed on one side of the polypropylene film. This increases the safety and is also effective in preventing capacitor breakdown or short-circuiting, for example.

As a method for forming a margin, any of generally known methods, such as a tape method and an oil method, can be used without any restrictions.

The metal layer-integrated polypropylene film of Embodiment 1 can be laminated by a known method or wound, thereby forming a film capacitor.

The film capacitor of Embodiment 1 may have a configuration in which a plurality of layers of a metal layer-integrated polypropylene film are laminated or may include a metal layer-integrated polypropylene film in a wound form. Such a film capacitor can be suitably used as a capacitor for an inverter power appliance that controls the drive motor of an electric vehicle or a hybrid vehicle, for example. In addition, the film capacitor can also be suitably used for railroad vehicles, wind power generation, photovoltaic power generation, and general household appliances, for example.

EXAMPLES

Hereinafter, examples of the present disclosure will be described. However, the present invention is not limited to the modes of the examples.

Table 1 shows the physical properties of polypropylene resins used to produce biaxially stretched polypropylene films. In Table 1, the polypropylene resin B is HPT-1 manufactured by Korea Petrochemical Ind. Co., Ltd., and the polypropylene resin C is S802M manufactured by Korea Petrochemical Ind. Co., Ltd. The polypropylene resin D is HC300-BF manufactured by Borealis, the polypropylene resin G is HB311-BF manufactured by Borealis, and the polypropylene resin J is HC318-BF manufactured by Borealis. The polypropylene resin A, the polypropylene resin E, the polypropylene resin F, and the polypropylene resin H are products manufactured by Prime Polymer Co., Ltd.

[Table 1]

| Polypropylene | $Mn \times 10^3$ | $Mw \times 10^3$ | $Mz \times 10^3$ | Mw/Mn | Mz/Mn | MFR dg/min | HI % |
|---|---|---|---|---|---|---|---|
| Resin A | 47 | 270 | 750 | 5.7 | 16.0 | 5.6 | 97.8 |
| Resin B | 45 | 350 | 1600 | 7.8 | 35.6 | 3.8 | 98.6 |
| Resin C | 46 | 380 | 1600 | 8.3 | 34.8 | 2.3 | 98.8 |
| Resin D | 42 | 340 | 1500 | 8.1 | 35.7 | 4.0 | 98.5 |
| Resin E | 66 | 310 | 910 | 4.7 | 13.8 | 3.4 | 97.6 |
| Resin F | 33 | 310 | 1400 | 9.4 | 42.4 | 4.9 | 97.3 |
| Resin G | 55 | 350 | 1200 | 6.4 | 21.8 | 2.8 | 96.4 |
| Resin H | 54 | 310 | 1200 | 5.7 | 22.2 | 5.0 | 97.5 |
| Resin J | 55 | 330 | 1200 | 6.0 | 21.8 | 4.0 | 97.2 |

Measurement of weight average molecular weight (Mw), number average molecular weight (Mn), z-average molecular weight (Mz), molecular weight distribution (Mw/Mn), and molecular weight distribution (Mz/Mn)

The weight average molecular weight (Mw), number average molecular weight (Mn), and z-average molecular weight (Mz) were measured using GPC (gel permeation chromatography) under the following conditions. In the preparation of a calibration curve, a standard polystyrene manufactured by Tosoh Corporation was used, and the measurement results were obtained in terms of polystyrene. For the conversion into the molecular weight of polypropylene, a Q-factor was used.

Measuring apparatus: Differential refractometer (RI) built-in high-temperature GPC apparatus manufactured by Tosoh Corporation, Model HLC-8121GPC-HT
Column: TSKgel GMHHR-H(20)HT manufactured by Tosoh Corporation, three columns connected
Column temperature: 140°C
Eluent: trichlorobenzene
Flow rate: 1.0 mL/min

Measurement of melt flow rate (MFR)

Measurement was performed in accordance with JIS K 7210-1999 under a load of 2.16 kg at 230°C.

Measurement of heptane insoluble content (HI)

3 g of a sample measuring 10 mm × 35 mm × 0.3 mm was prepared by press molding, and 150 mL of heptane was added thereto, followed by Soxhlet extraction for 8 hours. From the sample mass before and after the extraction, the heptane insoluble content was calculated.

Preparation of biaxially stretched polypropylene film in Example 1

According to Table 2, polypropylene resins (PP resin A and PP resin B) were weighed, and the PP resin A and the PP resin B were mixed in a weight ratio of PP resin A:PP resin B = 65:35, thereby giving a dry blend resin composition. Next, the dry blend resin composition was fed to an extruder, melted at 230°C, extruded through a T-die, wound around a metal drum maintained at a surface temperature (casting temperature) of 45°C, and solidified. As a result, a cast master sheet having a thickness of 900 μm was obtained. Next, using a batch-type biaxial stretching machine KARO IV manufactured by Bruckner, the cast master sheet was preheated at 165°C, then stretched in the longitudinal direction to 5.0 times the original length at a longitudinal stretching temperature of 165°C and a stretching speed of 600%/s, then preheated at 165°C before stretching in the transverse direction, subsequently stretched in the transverse direction to 10.5 times the original length at a transverse stretching temperature of 165°C and a stretching speed of 300%/s, and, after that, relaxed to 10 times the original length. As a result, a biaxially stretched polypropylene film having a thickness of 18 μm was obtained. Incidentally, in all the steps of preheating before stretching in the longitudinal direction, longitudinal stretching, preheating before stretching in the longitudinal direction, transverse stretching, and relaxation, the operations were performed at 165°C. In addition, in the preheating steps, the air volume was increased using a diffuser. The temperature of relaxation was 165°C, and the time of relaxation was 5 seconds. The relaxation rate was 4.8% [= {1 - (10/10.5)} × 100].

Preparation of biaxially stretched polypropylene film in Example 2

As a polypropylene resin, a dry blend resin composition prepared by mixing in a weight ratio of PP resin A:PP resin C = 65:35 was used. In otherwise the same manner as in Example 1, a biaxially stretched polypropylene film was obtained.

Preparation of biaxially stretched polypropylene film in Reference Example 3

As a polypropylene resin, a dry blend resin composition prepared by mixing in a weight ratio of PP resin A:PP resin D = 65:35 was used. In otherwise the same manner as in Example 1, a biaxially stretched polypropylene film was obtained.

Preparation of biaxially stretched polypropylene film in Example 4

As a polypropylene resin, a dry blend resin composition prepared by mixing in a weight ratio of PP resin D:PP resin B = 65:35 was used. In otherwise the same manner as in Example 1, a biaxially stretched polypropylene film was obtained.

Preparation of biaxially stretched polypropylene film in Reference Example 5

As a polypropylene resin, a dry blend resin composition prepared by mixing in a weight ratio of PP resin A:PP resin H = 65:35 was used. In addition, in all the steps of preheating before stretching in the longitudinal direction, longitudinal stretching, preheating before stretching in the transverse direction, transverse stretching, and relaxation, the operations were performed at a temperature of 160°C. In otherwise the same manner as in Example 1, a biaxially stretched polypropylene film was obtained.

Preparation of biaxially stretched polypropylene film in Example 6

As a polypropylene resin, a dry blend resin composition prepared by mixing in a weight ratio of PP resin D:PP resin B = 65:35 was used. In addition, the stretching speed in the transverse direction was changed from 300%/s to 320%/s. In otherwise the same manner as in Example 1, a biaxially stretched polypropylene film was obtained.

Preparation of biaxially stretched polypropylene film in Example 7

As a polypropylene resin, a dry blend resin composition prepared by mixing in a weight ratio of PP resin D:PP resin B = 65:35 was used. In addition, the stretching speed in the transverse direction was changed from 300%/s to 280%/s. In otherwise the same manner as in Example 1, a biaxially stretched polypropylene film was obtained.

Preparation of biaxially stretched polypropylene film in Comparative Example 1

As a polypropylene resin, a PP resin E was used. In otherwise the same manner as in Example 1, a biaxially stretched polypropylene film was obtained.

Preparation of biaxially stretched polypropylene film in Comparative Example 2

As a polypropylene resin, a dry blend resin composition prepared by mixing in a weight ratio of PP resin F:PP resin G = 65:35 was used. In addition, in all the steps of preheating before stretching in the longitudinal direction, longitudinal stretching, preheating before stretching in the transverse direction, transverse stretching, and relaxation, the operations were performed at a temperature of 166°C. In otherwise the same manner as in Example 1, a biaxially stretched polypropylene film was obtained.

Preparation of biaxially stretched polypropylene film in Comparative Example 3

As a polypropylene resin, a dry blend resin composition prepared by mixing in a weight ratio of PP resin A:PP resin H = 65:35 was used. In addition, in all the steps of preheating before stretching in the longitudinal direction, longitudinal stretching, preheating before stretching in the transverse direction, transverse stretching, and relaxation, the operations were performed at a temperature of 166°C. In otherwise the same manner as in Example 1, a biaxially stretched polypropylene film was obtained.

Preparation of biaxially stretched polypropylene film in Comparative Example 4

As a polypropylene resin, a dry blend resin composition prepared by mixing in a weight ratio of PP resin J:PP resin H = 65:35 was used. In otherwise the same manner as in Example 1, a biaxially stretched polypropylene film was obtained.

Preparation of biaxially stretched polypropylene film in Comparative Example 5

As a polypropylene resin, a dry blend resin composition prepared by mixing in a weight ratio of PP resin D:PP resin B = 65:35 was used. In addition, the stretching speed in the transverse direction was changed from 300%/s to 250%/s. In otherwise the same manner as in Example 1, a biaxially stretched polypropylene film was obtained.

Preparation of biaxially stretched polypropylene film in Comparative Example 6

As a polypropylene resin, a dry blend resin composition prepared by mixing in a weight ratio of PP resin C:PP resin A = 90:10 was used. In addition, in all the steps of preheating before stretching in the longitudinal direction, longitudinal stretching, preheating before stretching in the transverse direction, transverse stretching, and relaxation, the operations were performed at a temperature of 163°C. In otherwise the same manner as in Example 1, a biaxially stretched polypropylene film was obtained.

Preparation of biaxially stretched polypropylene film in Comparative Example 7

As a polypropylene resin, a dry blend resin composition prepared by mixing in a weight ratio of PP resin D:PP resin B = 65:35 was used. In addition, the stretching speed in the transverse direction was changed from 300%/s to 700%/s. In otherwise the same manner as in Example 1, an attempt was made to obtain a biaxially stretched polypropylene film having a thickness of 18 μm. However, unevenness in the film thickness was extremely large so that the film was unusable as a film capacitor device.

Measurement of melting point and fusion enthalpy

A 5-mg sample was cut out from a biaxially stretched polypropylene film, enclosed in a pan made of aluminum, and subjected to input compensation differential scanning calorimetry using a differential scanning calorimeter (Diamond DSC manufactured by PerkinElmer). In the measurement, the temperature was raised in a nitrogen atmosphere from 30°C to 280°C at 20°C/min (first run). From the results of the first run, the melting point and the fusion enthalpy were determined.

Measurement of crystallite size

The crystallite size of a biaxially stretched polypropylene film was measured using an XRD (wide-angle X-ray diffraction) apparatus as follows.

Measuring apparatus: Desk-top X-ray diffractometer "MiniFlex300" manufactured by Rigaku Corporation
X-ray generation power: 30 kV, 10 mA
Applied X-ray: Monochrome meter-monochromatized CuKα ray (wavelength: 0.15418 nm)
Detector: Scintillation counter
Goniometer scanning: 2θ/θ coupled scanning

From the obtained data, using an analysis computer, the full width at half maximum of the reflection peak from (040) plane of α crystal was calculated using the integrated powder X-ray-analysis software PDXL, a standard attachment of the apparatus. From the full width at half maximum, the crystallite size was determined using Scherrer's equation shown as formula (1) .
[Equation 2]

$$D = K \times \lambda / (\beta \times Cos\theta) \quad (1)$$

In formula (1), D is a crystallite size (nm), K is a constant (shape factor), λ is the wavelength of the X-ray used (nm), β is the determined full width at half maximum, and θ is a diffraction Bragg angle. 0.94 was used as K.

Measurement of electric strength

The dielectric breakdown voltage was measured 12 times in accordance with JIS C2330 (2001) 7.4.11.2, B Method (Plate Electrode Method). These dielectric breakdown voltages were divided by the thickness (μm) of the biaxially stretched polypropylene film, and the average of eight measurements excluding the values of top two and bottom two was determined and defined as the electric strength. In a test using an AC power supply, the dielectric breakdown voltage was measured at ambient temperatures of 100°C and 120°C. In a test using a DC power supply, the dielectric breakdown voltage was measured at an ambient temperature of 120°C.

[Table 2]

| | Example 1 | Example 2 | Example 3* | Example 4 | Example 51 | Example 6 | Example 7 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Blending (parts by weight) | Resin A 65 Resin B 35 | Resin A 65 Resin C 35 | Resin A 65 Resin D 35 | Resin D 65 Resin B 35 | Resin A 65 Resin H 35 | Resin D 65 Resin B 35 | Resin D 65 Resin B 35 | Resin E 100 - - | Resin F 65 Resin G 35 | Resin A 65 Resin H 35 | Resin J 65 Resin H 35 | Resin D 65 Resin B 35 | Resin C 90 Resin A 10 | Resin D 65 Resin B 35 |
| Casting temperature [°C] | 45 | 45 | 45 | 45 | 45 | 45 | 45 | 45 | 45 | 45 | 45 | 45 | 45 | 45 |
| Longitudinal stretching temperature [°C] | 165 | 165 | 165 | 165 | 160 | 165 | 165 | 165 | 166 | 166 | 165 | 165 | 163 | 163 |
| Longitudinal draw ratio | 5.0 | 5.0 | 5.0 | 5.0 | 5.0 | 5.0 | 5.0 | 5.0 | 5.0 | 5.0 | 5.0 | 5.0 | 5.0 | 5.0 |
| Pre-transverse stretching preheating temperature [°C] | 165 | 165 | 165 | 165 | 160 | 165 | 165 | 165 | 166 | 166 | 165 | 165 | 163 | 163 |
| Transverse stretching temperature [°C] | 165 | 165 | 165 | 165 | 160 | 165 | 165 | 165 | 166 | 166 | 165 | 165 | 163 | 163 |
| Transverse stretching speed [%ls] | 300 | 300 | 300 | 300 | 300 | 320 | 280 | 300 | 300 | 300 | 300 | 250 | 300 | 700 |
| Transverse draw ratio | 10.5 | 10.5 | 10.5 | 10.5 | 10.5 | 10.5 | 10.5 | 10.5 | 10.5 | 10.5 | 10.5 | 10.5 | 10.5 | |
| Melting point [°C] | 173.7 | 174.7 | 174.0 | 174.9 | 173.4 | 174.7 | 175.0 | 172.5 | 170.7 | 174.5 | 171.5 | 175.2 | 174.7 | - |

EP 3 608 353 B1

16

(continued)

| | Example 1 | Example 2 | Example 3* | Example 4 | Example 51 | Example 6 | Example 7 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Fusion enthalpy (Hm) [J/g] | 120.5 | 119.1 | 120.6 | 119.0 | 112.6 | 118.9 | 119.2 | 106.8 | 116.3 | 117.4 | 109.9 | 119.3 | 119.3 | - |
| Crystallite size (Sc) [nm] | 14.1 | 13.7 | 14.0 | 14.1 | 12.5 | 14.0 | 14.1 | 14.6 | 14.3 | 14.1 | 15.1 | 14.4 | 13.0 | - |
| Fusion enthalpy/√crystallite size (Hm/√Sc) [J/g·nm$^{1/2}$] | 32.1 | 32.2 | 32.3 | 31.7 | 31.8 | 31.8 | 31.7 | 28.0 | 30.7 | 31.2 | 28.2 | 31.4 | 33.1 | - |
| Electric strength AC100°C [V/pm] | 246 | 250 | 243 | 247 | 245 | 250 | 245 | 241 | 249 | 242 | 237 | 240 | 240 | - |
| AC120°C [V/pm] | 236 | 239 | 237 | 235 | 232 | 239 | 233 | 237 | 217 | 228 | 238 | 225 | 231 | - |
| DC120°C [V/pm] | 518 | 528 | 525 | 526 | 550 | 534 | 520 | 489 | 518 | 507 | 455 | 508 | 509 | - |

Examples indicated with an asterisk (*) represent Reference Examples.

The "melting point + 50/crystallite size" of each biaxially stretched polypropylene film was 177.2 in Example 1, 178.4 in Example 2, 177.5 in Reference Example 3, 178.4 in Example 4, 177.4 in Reference Example 5, 178.3 in Example 6, 178.5 in Example 7, 175.9 in Comparative Example 1, 174.1 in Comparative Example 2, 178.0 in Comparative Example 3, 174.8 in Comparative Example 4, 178.7 in Comparative Example 5, and 178.5 in Comparative Example 6.

The biaxially stretched polypropylene films of Examples 1, 2, 4, 6, and 7 and of Reference Examples 3 and 5 were excellent in DC electric strength at 120°C and also excellent in AC electric strength at 120°C. In addition, the biaxially stretched polypropylene films of Examples 1, 2, 4, 6, and 7 and of Reference Examples 3 and 5 were further also excellent in AC electric strength at 100°C. In a electric strength test using an AC power supply, heat generation or degradation (decomposition, etc.) occurs in the film due to corona discharge, or leakage currents occur due to the alternate changes in polarity, resulting in Joule heating caused by the leakage currents; in this respect, the test is different from a electric strength test using a DC power supply. In the biaxially stretched polypropylene films of Examples 1, 2, 4, 6, and and of Reference Examples 3 and 5, as described above, the electric strength was excellent even in the case where both a DC voltage and an AC voltage were applied at 120°C.

Preparation of biaxially stretched polypropylene film in Example 8

According to Table 3, polypropylene resins (PP resin F and PP resin B) were weighed, and the PP resin F and the PP resin B were mixed in a weight ratio of PP resin A:PP resin B = 60:40, thereby giving a dry blend resin composition. Next, the dry blend resin composition was fed to an extruder, melted at 250°C, extruded through a T-die, wound around a metal drum maintained at a surface temperature (casting temperature) of 95°C, and solidified. As a result, an unstretched cast master sheet having a thickness of 100 μm was obtained. The obtained unstretched cast master sheet was preheated to 130°C before longitudinal stretching, maintained at a temperature of 130°C to make the longitudinal stretching temperature 130°C, passed between rolls having different speeds and stretched in the longitudinal direction to 4.0 times the original length, and immediately cooled to room temperature. Subsequently, the uniaxially stretched film was introduced to a tenter, preheated at 171°C before stretching in the transverse direction, and then stretched in the transverse direction to 10.0 times the original length at a stretching speed of 300%/s and a transverse stretching temperature of 160°C. Subsequently, the biaxially stretched film was relaxed in the transverse direction to 9 times the original length, heat-set, then wound up, and subjected to an aging treatment in an atmosphere at 30°C. As a result, a biaxially stretched polypropylene film having a thickness of 2.5 μm was obtained. The temperature of relaxation (heat setting) was 160°C, and the time of relaxation was 4 seconds. The relaxation rate was 10% [= {1 - (9/10)} × 100].

Preparation of biaxially stretched polypropylene film in Example 9

As a polypropylene resin, a dry blend resin composition prepared by mixing in a weight ratio of PP resin D:PP resin C = 80:20 was used. In addition, the temperature of preheating before stretching in the transverse direction (pre-transverse stretching preheating temperature) was changed from 171°C to 172°C. In otherwise the same manner as in Example 8, a biaxially stretched polypropylene film having a thickness of 2.5 μm was obtained.

Preparation of biaxially stretched polypropylene film in Example 10

As a polypropylene resin, a dry blend resin composition prepared by mixing in a weight ratio of PP resin A:PP resin C = 75:25 was used. In addition, the extrusion amount of the dry blend resin composition was adjusted to change the thickness of the unstretched cast master sheet from 100 μm to 90 μm. In addition, the temperature of preheating before stretching in the transverse direction (pre-transverse stretching preheating temperature) was changed from 171°C to 172°C. In otherwise the same manner as in Example 8, a biaxially stretched polypropylene film having a thickness of 2.3 μm was obtained.

Preparation of biaxially stretched polypropylene film in Example 11

As a polypropylene resin, a dry blend resin composition prepared by mixing in a weight ratio of PP resin F:PP resin C = 65:35 was used. In addition, the extrusion amount of the dry blend resin composition was adjusted to change the thickness of the unstretched cast master sheet from 100 μm to 90 μm. In addition, the temperature of preheating before stretching in the transverse direction (pre-transverse stretching preheating temperature) was changed from 171°C to 172°C. In otherwise the same manner as in Example 8, a biaxially stretched polypropylene film having a thickness of 2.3 μm was obtained.

Preparation of biaxially stretched polypropylene film in Comparative Example 8

As a polypropylene resin, a dry blend resin composition prepared by mixing in a weight ratio of PP resin F:PP resin B = 60:40 was used. In addition, the temperature of preheating before stretching in the transverse direction (pre-transverse stretching preheating temperature) was changed from 171°C to 173°C. In otherwise the same manner as in Example 8, a biaxially stretched polypropylene film having a thickness of 2.5 μm was obtained.

Preparation of biaxially stretched polypropylene film in Comparative Example 9

As a polypropylene resin, a dry blend resin composition prepared by mixing in a weight ratio of PP resin A:PP resin C = 75:25 was used. In addition, the extrusion amount of the dry blend resin composition was adjusted to change the thickness of the unstretched cast master sheet from 100 μm to 90 μm. In addition, the temperature of preheating before stretching in the transverse direction (pre-transverse stretching preheating temperature) was changed from 171°C to 173°C. In otherwise the same manner as in Example 8, a biaxially stretched polypropylene film having a thickness of 2.3 μm was obtained.

The melting point, fusion enthalpy, crystallite size, and electric strength of each biaxially stretched polypropylene film were measured by the method described above.

[Table 3]

| | Example 8 | Example 9 | Example 10 | Example 11 | Comparative Example 8 | Comparative Example 9 |
|---|---|---|---|---|---|---|
| Blending (parts by weight) | Resin F 60 Resin B 40 | Resin D 80 Resin C 20 | Resin A 75 Resin C 25 | Resin F 65 Resin C 35 | Resin F 60 Resin B 40 | Resin A 75 Resin C 25 |
| Casting temperature [°C] | 95 | 95 | 95 | 95 | 95 | 95 |
| Longitudinal stretching temperature [°C] | 130 | 130 | 130 | 130 | 130 | 130 |
| Longitudinal draw ratio | 4.0 | 4.0 | 4.0 | 4.0 | 4.0 | 4.0 |
| Pre-transverse stretching preheating temperature [°C] | 171 | 172 | 172 | 172 | 173 | 173 |
| Transverse stretching temperature [°C] | 160 | 160 | 160 | 160 | 160 | 160 |
| Transverse stretching speed [%/s] | 300 | 300 | 300 | 300 | 300 | 300 |
| Transverse draw ratio | 10.0 | 10.0 | 10.0 | 10.0 | 10.0 | 10.0 |
| Melting point [°C] | 171.9 | 173.6 | 172.5 | 172.4 | 173.1 | 173.1 |
| Fusion enthalpy (Hm) [J/g] | 109.7 | 111.5 | 107.3 | 107.8 | 110.9 | 108.0 |
| Crystallite size (Sc) [nm] | 12.1 | 12.1 | 11.6 | 11.5 | 12.2 | 11.8 |
| Fusion enthalpy/ $\sqrt{}$ crystallite size (Hm/NSc) [J/g·nm$^{1/2}$] | 31.6 | 32.1 | 31.6 | 31.8 | 31.4 | 31.4 |
| Electric strength AC100°C [V/μm] | 245 | 252 | 260 | 262 | 235 | 237 |
| AC120°C [V/μm] | 232 | 239 | 248 | 245 | 225 | 226 |
| DC120°C [V/μm] | 519 | 535 | 555 | 549 | 500 | 505 |

The "melting point + 50/crystallite size" of each biaxially stretched polypropylene film was 176.1 in Example 8, 177.8 in Example 9, 176.8 in Example 10, 176.7 in Example 11, 177.2 in Comparative Example 8, and 177.3 in Comparative Example 9.

The biaxially stretched polypropylene films of Examples 8 to 11 were excellent in DC electric strength at 120°C and also excellent in AC electric strength at 120°C. In addition, the biaxially stretched polypropylene films of Examples 8 to 11 were further also excellent in AC electric strength at 100°C.

**Claims**

1. A polypropylene film satisfying formula I and having a thickness of 1.0 μm to 19 μm, wherein the polypropylene film is a biaxially stretched film, which is preheated to 155°C to 172°C after longitudinal stretching and before transverse stretching, and

the polypropylene film being configured such that
the formula I is 31.5 ≤ fusion enthalpy/√crystallite size ≤ 33.0,
in the formula I, the unit of the fusion enthalpy is J/g, and the unit of the crystallite size is nm,
the fusion enthalpy is determined according to the method in the description, and
the crystallite size is determined using Scherrer's equation from a full width at half maximum of the reflection peak from (040) plane of α crystal measured by a wide-angle X-ray diffraction method, wherein
the polypropylene film comprises a first polypropylene resin and a second polypropylene resin, wherein the first polypropylene resin is comprised as a main component at a content of, relative to 100 wt% of the polypropylene resin, 50 wt% or more,
the first polypropylene resin has a number average molecular weight Mn of 30,000 or more and 54,000 or less,
the first polypropylene resin has a weight average molecular weight Mw of 250,000 or more and less than 350,000,
the ratio of Mw to Mn in the first polypropylene resin is 5.0 or more and 10.0 or less,
the first polypropylene resin has a heptane insoluble content of 97.0% or more and 98.5% or less,
the first polypropylene resin has a melt flow rate of 4.0 g/10 min or more and 10.0 g/10 min or less,
the second polypropylene resin has a number average molecular weight Mn of 40,000 or more and 54,000 or less,
the second polypropylene resin has a weight average molecular weight Mw of 350,000 or more and less than 550,000,
the ratio of Mw to Mn in the second polypropylene resin is 3.0 or more and 11.0 or less,
the second polypropylene resin has a melt flow rate of 1.0 g/10 min or more and less than 4.0 g/10 min, and
the second polypropylene resin has a heptane insoluble content of 97.5% or more and 99.5% or less, wherein
the number average molecular weight Mn, the weight average molecular weight Mw, the heptane insoluble content and the melt flow rate are determined according to the methods in the description.

2. The polypropylene film according to claim 1, wherein

the polypropylene film further satisfies formula II,
the formula II is 176 ≤ melting point + (50/crystallite size), and
in the formula II, the unit of the melting point is °C, and the unit of the crystallite size is nm, and
wherein the melting point and the crystallite size are determined according to the methods in the description.

3. The polypropylene film according to claim 1 or 2, for a capacitor.

4. A metal layer-integrated polypropylene film comprising:

the polypropylene film according to any one of claims 1 to 3; and
a metal layer laminated on one or both sides of the polypropylene film.

5. A film capacitor comprising the metal layer-integrated polypropylene film according to claim 4 in a wound form or having a configuration in which a plurality of layers of the metal layer-integrated polypropylene film according to claim 4 are stacked.

6. The polypropylene film according to any one of claims 1 to 3, wherein

the electric strength under DC voltage at 120°C ($V_{DC120°C}$) of the polypropylene film is 510 V/μm or more and 600 V/μm or less,
the crystallite size ($S_c$) of the polypropylene film is 12.5 nm or less,
the thickness of the polypropylene film is 1.0 μm to 3.0 μm, and
the fusion enthalpy ($H_m$) of the polypropylene film is 105 J/g to 122 J/g, wherein
the electric strength, the crystallite size and the fusion enthalpy are determined according to the methods in the description.

**Patentansprüche**

1. Polypropylenfolie, die der Formel I genügt und eine Dicke von 1,0 $\mu$m bis 19 $\mu$m aufweist, wobei die Polypropylenfolie eine biaxial gestreckte Folie ist, die nach der Längsstreckung und vor der Querstreckung auf 155°C bis 172°C vorerwärmt wird, und

 wobei die Polypropylenfolie so konfiguriert ist
 dass die Formel I 31,5 ≤Fusionsenthalpie/ √Kristallitgröße ≤33,0 ist,
 in der Formel I die Einheit der Fusionsenthalpie J/g ist und die Einheit der Kristallitgröße nm ist,
 die Fusionsenthalpie nach der Methode in der Beschreibung bestimmt wird, und
 die Kristallitgröße unter Verwendung der Scherrer-Gleichung aus einer Halbwertsbreite des Reflexionspeaks von der (040)-Ebene des $\alpha$ Kristalls, gemessen durch ein Weitwinkel-Röntgenbeugungsverfahren, bestimmt wird, wobei
 die Polypropylenfolie ein erstes Polypropylenharz und ein zweites Polypropylenharz umfasst, wobei das erste Polypropylenharz als Hauptkomponente mit einem Gehalt von 50 Gew.- % oder mehr, bezogen auf 100 Gew.-% des Polypropylenharzes, enthalten ist,
 das erste Polypropylenharz ein Zahlenmittel des Molekulargewichts Mn von 30.000 oder mehr und 54.000 oder weniger aufweist,
 das erste Polypropylenharz ein gewichtsmittleres Molekulargewicht Mw von 250.000 oder mehr und weniger als 350.000 aufweist,
 das Verhältnis von Mw zu Mn im ersten Polypropylenharz 5,0 oder mehr und 10,0 oder weniger beträgt,
 das erste Polypropylenharz einen in Heptan unlöslichen Gehalt von 97,0 % oder mehr und 98,5 % oder weniger aufweist,
 das erste Polypropylenharz eine Schmelzflussrate von 4,0 g/10 Min. oder mehr und 10,0 g/10 Min. oder weniger aufweist,
 das zweite Polypropylenharz ein Zahlenmittel des Molekulargewichts Mn von 40.000 oder mehr und 54.000 oder weniger aufweist,
 das zweite Polypropylenharz ein gewichtsmittleres Molekulargewicht Mw von 350.000 oder mehr und weniger als 550.000 aufweist,
 das Verhältnis von Mw zu Mn im zweiten Polypropylenharz 3,0 oder mehr und 11,0 oder weniger beträgt,
 das zweite Polypropylenharz eine Schmelzflussrate von 1,0 g/10 Min. oder mehr und weniger als 4,0 g/10 Min. aufweist, und
 das zweite Polypropylenharz einen in Heptan unlöslichen Gehalt von 97,5 % oder mehr und 99,5 % oder weniger aufweist, wobei
 das Zahlenmittel des Molekulargewichts Mn, das Gewichtsmittel des Molekulargewichts Mw, der in Heptan unlösliche Gehalt und die Schmelzflussrate gemäß den Methoden in der Beschreibung bestimmt werden.

2. Polypropylenfolie nach Anspruch 1, wobei

 die Polypropylenfolie weiter die Formel II erfüllt,
 die Formel II 176 ≤Schmelzpunkt + (50/Kristallitgröße) ist, und
 in der Formel II die Einheit des Schmelzpunkts °C ist und die Einheit der Kristallitgröße nm ist, und
 wobei der Schmelzpunkt und die Kristallitgröße gemäß den Methoden in der Beschreibung bestimmt werden.

3. Polypropylenfolie nach Anspruch 1 oder 2 für einen Kondensator.

4. Polypropylenfolie mit integrierter Metallschicht, umfassend:

 die Polypropylenfolie nach einem der Ansprüche 1 bis 3; und
 eine Metallschicht, die auf einer oder beiden Seiten der Polypropylenfolie laminiert ist.

5. Folienkondensator, umfassend die Polypropylenfolie mit integrierter Metallschicht nach Anspruch 4 in gewickelter Form oder mit einer Konfiguration, in der mehrere Schichten der Polypropylenfolie mit integrierter Metallschicht nach Anspruch 4 gestapelt sind.

6. Polypropylenfolie nach einem der Ansprüche 1 bis 3, wobei

 die Spannungsfestigkeit der Polypropylenfolie unter Gleichspannung bei 120°C ($V_{DC120°C}$) 510 V/$\mu$m oder mehr

und 600 V/$\mu$m oder weniger beträgt,
die Kristallitgröße (S) der Polypropylenfolie 12,5 nm oder weniger beträgt,
die Dicke der Polypropylenfolie 1,0 $\mu$m bis 3,0 $\mu$m beträgt, und
die Schmelzenthalpie ($H_m$) der Polypropylenfolie 105 J/g bis 122 J/g beträgt, wobei die elektrische Festigkeit, die Kristallitgröße und die Schmelzenthalpie nach den Methoden in der Beschreibung bestimmt werden.

## Revendications

1. Film de polypropylène satisfaisant la formule I et ayant une épaisseur de 1,0 $\mu$m à 19 $\mu$m, dans lequel le film de polypropylène est un film à étirement biaxial qui est préchauffé à 155 °C à 172 °C après étirement longitudinal et avant étirement transversal, et

   le film de polypropylène étant configuré de sorte que
   la formule I est 31,5 ≤ enthalpie de fusion/√taille de cristallite ≤ 33,0,
   dans la formule I, l'unité de l'enthalpie de fusion est J/g et l'unité de la taille de cristallite est nm,
   l'enthalpie de fusion est déterminée conformément au procédé dans la description, et
   la taille de cristallite est déterminée en utilisant l'équation de Scherrer à partir d'une largeur entière à demi-maximum du pic de réflexion à partir du plan (040) de cristal $\alpha$ mesuré par un procédé de diffraction des rayons X aux grands angles, dans lequel
   le film de polypropylène comprend une première résine de polypropylène et une seconde résine de polypropylène, dans lequel la première résine de polypropylène est comprise en tant que composant principal à une teneur de 50 % en poids ou plus par rapport à 100 % en poids de la résine de polypropylène,
   la première résine de polypropylène a un poids moléculaire moyen en nombre Mn de 30 000 ou plus et 54 000 ou moins,
   la première résine de polypropylène a un poids moléculaire moyen en poids Mw de 250 000 ou plus et moins de 350 000,
   le rapport de Mw sur Mn dans la première résine de polypropylène est de 5,0 ou plus et 10,0 ou moins,
   la première résine de polypropylène a une teneur insoluble en heptane de 97,0 % ou plus et 98,5 % ou moins,
   la première résine de polypropylène a un indice de fluidité de 4,0 g/10 min ou plus et 10,0 g/10 min ou moins,
   la seconde résine de polypropylène a un poids moléculaire moyen en nombre Mn de 40 000 ou plus et 54 000 ou moins,
   la seconde résine de polypropylène a un poids moléculaire moyen en poids Mw de 350 000 ou plus et moins de 550 000,
   le rapport de Mw sur Mn dans la seconde résine de polypropylène est de 3,0 ou plus et 11,0 ou moins,
   la seconde résine de polypropylène a un indice de fluidité de 1,0 g/10 min ou plus et moins de 4,0 g/10 min, et
   la seconde résine de polypropylène a une teneur insoluble en heptane de 97,5 % ou plus et 99,5 % ou moins, dans lequel
   le poids moléculaire moyen en nombre Mn, le poids moléculaire moyen en poids Mw, la teneur insoluble en heptane et l'indice de fluidité sont déterminés conformément aux procédés dans la description.

2. Film de polypropylène selon la revendication 1, dans lequel

   le film de polypropylène satisfait en outre la formule II,
   la formule II est 176 ≤ point de fusion + (50/taille de cristallite), et
   dans la formule II, l'unité du point de fusion est °C et l'unité de la taille de cristallite est nm, et
   dans lequel le point de fusion et la taille de cristallite sont déterminés conformément aux procédés dans la description.

3. Film de polypropylène selon la revendication 1 ou 2, pour un condensateur.

4. Film de polypropylène intégré à une couche métallique comprenant :

   le film de polypropylène selon l'une quelconque des revendications 1 à 3 ; et
   une couche métallique stratifiée sur un côté ou les deux du film de polypropylène.

5. Condensateur à film comprenant le film de polypropylène intégré à une couche métallique selon la revendication 4 sous une forme enroulée ou ayant une configuration dans laquelle une pluralité de couches du film de polypropylène intégré à une couche métallique selon la revendication 4 sont empilées.

6. Film de polypropylène selon l'une quelconque des revendications 1 à 3, dans lequel

la résistance électrique sous tension CC à 120 °C ($V_{DC120°C}$) du film de polypropylène est de 510 V/$\mu$m ou plus et 600 V/$\mu$m ou moins,
la taille de cristallite ($S_c$) du film de polypropylène est de 12,5 nm ou moins, l'épaisseur du film de polypropylène est de 1,0 $\mu$m à 3,0 $\mu$m, et
l'enthalpie de fusion ($H_m$) du film de polypropylène est de 105 J/g à 122 J/g, dans lequel
la résistance électrique, la taille de cristallite et l'enthalpie de fusion sont déterminées conformément aux procédés dans la description.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010280795 A
- JP 6238403 B
- JP 6089186 B
- JP 3689009 B

- EP 3127945 A1
- EP 3279908 A1
- EP 1990353 A1

**Non-patent literature cited in the description**

- Kobunshi. *High Polymers, Japan,* 1967, vol. 16 (6), 694-706